(19) Europäisches Patentamt
European Patent Office
Office européen des brevets

(11) **EP 1 984 560 B1**

(12) **FASCICULE DE BREVET EUROPEEN**

(45) Date de publication et mention
de la délivrance du brevet:
**22.05.2013 Bulletin 2013/21**

(51) Int Cl.:
***D07B 1/06*** *(2006.01)*   ***D07B 1/16*** *(2006.01)*
***D07B 7/14*** *(2006.01)*

(21) Numéro de dépôt: **07703301.7**

(22) Date de dépôt: **06.02.2007**

(86) Numéro de dépôt international:
**PCT/EP2007/000993**

(87) Numéro de publication internationale:
**WO 2007/090603 (16.08.2007 Gazette 2007/33)**

(54) **CABLE COMPOSITE ELASTIQUE POUR PNEUMATIQUE**

ELASTISCHER VERBUNDREIFENKORD

RESILIENT COMPOSITE TYRE CORD

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **09.02.2006 FR 0601174**

(43) Date de publication de la demande:
**29.10.2008 Bulletin 2008/44**

(73) Titulaires:
• **COMPAGNIE GENERALE DES
ETABLISSEMENTS MICHELIN
63000 Clermont-Ferrand (FR)**
• **Michelin Recherche et Technique S.A.
1463 Granges-Paccot (CH)**

(72) Inventeurs:
• **BARGUET, Henri
F-63430 Les Martres d'Artière (FR)**
• **CHAUVIN, Brigitte
F-63400 Chamalières (FR)**
• **DOMINGO, Alain
F-63190 Orleat (FR)**
• **POTTIER, Thibaud
F-63200 Malauzat (FR)**

(74) Mandataire: **Ribière, Joel
M.F.P. Michelin,
SGD/LG/PI - F35 - Ladoux
63040 Clermont-Ferrand Cedex 9 (FR)**

(56) Documents cités:
DE-A- 1 908 605    FR-A- 2 873 721
GB-A- 1 100 686    US-A- 3 977 174

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention est relative aux câbles métalliques du type "élastiques" (i.e:, à haute élongation), utilisables notamment pour le renforcement d'articles en caoutchouc tels que des pneumatiques. Elle se rapporte plus particulièrement à l'utilisation de tels câbles dans les armatures de renforcement du sommet de tels pneumatiques.

Un pneumatique à armature de carcasse radiale, de manière connue, comporte une bande de roulement, deux bourrelets inextensibles, deux flancs reliant les bourrelets à la bande de roulement et une armature de sommet ou "ceinture" disposée circonférentiellement entre l'armature de carcasse et la bande de roulement, cette ceinture étant constituée de diverses nappes ou couches de caoutchouc comportant ou non des éléments de renforcement ("renforts") tels que des câbles ou des monofilaments, du type métalliques ou textiles.

Ladite ceinture de pneumatique est généralement constituée d'au moins deux nappes ou couches de ceinture superposées, qualifiées généralement de nappes "de travail" ou nappes "croisées", dont les câbles de renforcement, en général métalliques, sont disposés pratiquement parallèles les uns aux autres à l'intérieur d'une couche, mais croisés d'une couche à l'autre (c'est-à-dire inclinés, symétriquement ou non, par rapport au plan circonférentiel médian) d'un angle qui est généralement compris entre 10° et 45° selon le type de pneu considéré. Ces couches ou nappes croisées peuvent être complétées par diverses autres nappes ou couches de caoutchouc auxiliaires comportant ou non des renforts.

En particulier, de manière bien connue, la ceinture peut comporter par exemple une ou plusieurs nappes ou couches sommet dites "de protection", situées sous la bande de roulement et surmontant la ou les nappes sommet de travail, chargées de protéger le reste de la ceinture des agressions externes, déchirures ou autres perforations. C'est par exemple le cas général dans les ceintures des pneumatiques pour véhicules Poids-lourd ou Génie civil.

Ces nappes ou couches de protection doivent être suffisamment souples et déformables pour, d'une part, épouser au mieux la forme de l'obstacle sur lequel la ceinture appuie lors du roulage, et, d'autre part s'opposer à la pénétration de corps étrangers radialement à l'intérieur de celle-ci. La satisfaction de tels critères exige, de manière connue, l'utilisation dans ces couches de protection de renforts ou câbles présentant une haute élasticité ainsi qu'une énergie à la rupture élevée.

On utilise habituellement des câbles d'acier (en anglais *"steel cords"*) dits "à torons" (*"strand cords"*) (qualifiés aussi de câbles "HE" pour haute élongation), qui sont assemblés par la technique connue de toronnage et constitués d'une pluralité de torons métalliques retordus ensemble en hélice, chaque toron comportant plusieurs (trois ou plus) fils d'acier également enroulés ensemble en hélice.

De tels câbles élastiques à torons ont été décrits dans un grand nombre brevets ou demandes de brevet (voir par exemple US 3 686 855, US 4 176 705, WO 2004/003287 ou US 2005/0183808), en particulier pour renforcer des nappes sommet de protection de pneumatiques pour véhicules industriels tels que Poids-lourd ou Génie civil (voir par exemple US 5 843 583, US 6 475 636, WO 2004/003287 ou US 2005/0183808, WO 2004/033789 ou US 7 089 726, WO 2005/014925 ou US 2006/0179813).

Un inconvénient bien connu de ces câbles à torons est qu'ils sont coûteux, ceci à double titre : d'une part, ils sont préparés en deux étapes, à savoir par fabrication préalable des torons puis assemblage par retordage de ces torons ; d'autre part, ils nécessitent généralement une torsion élevée de leurs fils (soit des pas d'hélice très courts), torsion certes indispensable pour leur conférer l'élasticité souhaitée mais impliquant des vitesses de fabrication réduites. Cet inconvénient se répercute bien entendu sur le coût des pneumatiques eux-mêmes.

Un autre inconvénient général de ces câbles élastiques à torons est leur encombrement (diamètre externe) important. Or, un objectif majeur d'un manufacturier de pneumatiques voulant réduire la résistance au roulement desdits pneumatiques, et donc l'hystérèse entre autres des ceintures de pneumatiques, est aujourd'hui de diminuer l'épaisseur des tissus de renforcement composites utilisés dans ces ceintures, en particulier grâce à la mise au point de câbles à plus forte compacité.

Poursuivant leurs recherches, les Demanderesses ont découvert un câble élastique nouveau, à compacité élevée, qui non seulement permet de pallier les inconvénients précités des câbles élastiques à torons, mais améliore encore l'endurance des ceintures des pneumatiques.

En conséquence, un premier objet de l'invention est un câble composite métal-textile, élastique, à deux couches $(Ci, Ce)$, de construction 1+N, qui est formé d'un noyau ou couche interne $(Ci)$ comportant un fil d'âme textile de diamètre $d_1$, et une couche externe métallique $(Ce)$ de N fils de diamètre $d_2$ enroulés ensemble en hélice selon un pas $p_2$ autour de la couche interne Ci, ledit câble étant caractérisé en ce qu'il présente en outre les caractéristiques suivantes combinées $(p_2$ en mm) :

■ As > 1,0 % ; At > 4,0 % ; Af > 6,0 % ; $d_1$ > 1,1 $d_2$ ; 4 < $p_2$ < 14 ;
■ le fil d'âme est une fibre textile, et il est enrobé d'une gaine de composition d'élastomère diénique,

As étant l'allongement structural du câble composite, At son allongement total à la rupture, et Af étant l'allongement à la rupture de la fibre textile.

Ce câble à deux couches appartient à la famille générique des câbles composites (ou hybrides) métal-textile à deux couches, de construction 1+N, comportant un noyau en polymère et une couche externe métallique de N fils individuels (voir à titre d'exemples GB 1 100 686, FR 2 260 660 ou US 3 977 174, US 2003/051788).

Grâce à sa construction spécifique, le câble de l'invention présente une haute élasticité combinée à une compacité élevée, une excellente pénétrabilité par le caoutchouc favorisant sa résistance à la corrosion. Il est simple à préparer, peut être fabriqué en une seule étape et présente un coût industriel réduit. Grâce à sa couche interne spécifique, des torsions modérées peuvent être utilisés sur les N fils de sa couche externe.

L'invention concerne également tout tissu composite comportant une matrice en matière plastique et/ou en caoutchouc renforcée par un câble selon l'invention.

L'invention concerne également l'utilisation d'un tel câble comme élément de renforcement d'articles ou de produits semi-finis en matière plastique et/ou en caoutchouc, lesdits articles ou produits étant notamment destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire, ainsi que ces articles ou produits semi-finis eux-mêmes.

Les pneumatiques de l'invention peuvent être destinés à des véhicules du type tourisme, 4x4, "SUV" (*Sport Utility Vehicles*)*,* mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules de transport ou de manutention.

Le câble de l'invention est tout particulièrement destiné à être utilisé comme élément de renforcement d'une ceinture de pneumatique destiné en particulier aux véhicules ci-dessus.

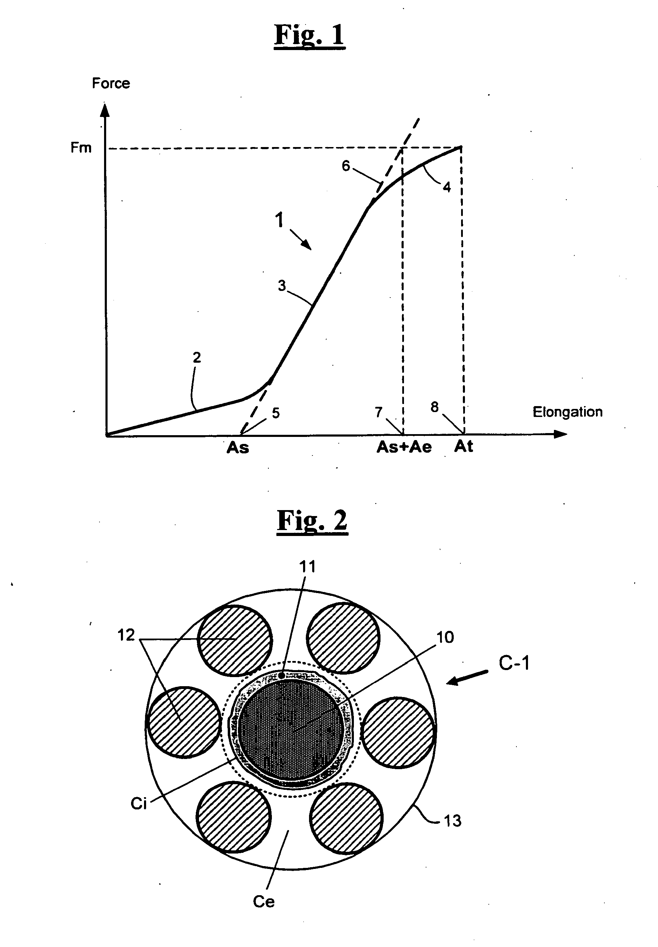

L'invention ainsi que ses avantages seront aisément compris à la lumière de la description et des exemples de réalisation qui suivent, ainsi que des figures 1 à 5 relatives à ces exemples qui schématisent, respectivement :

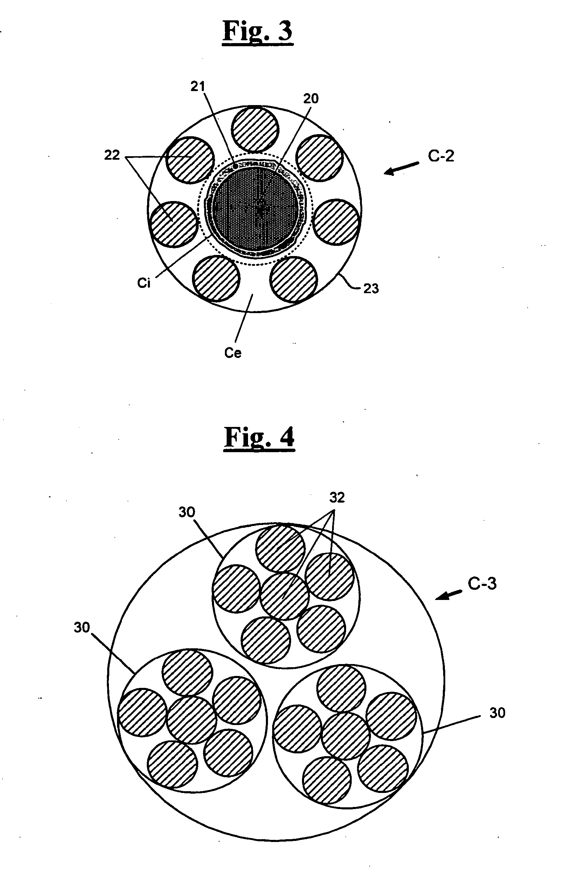

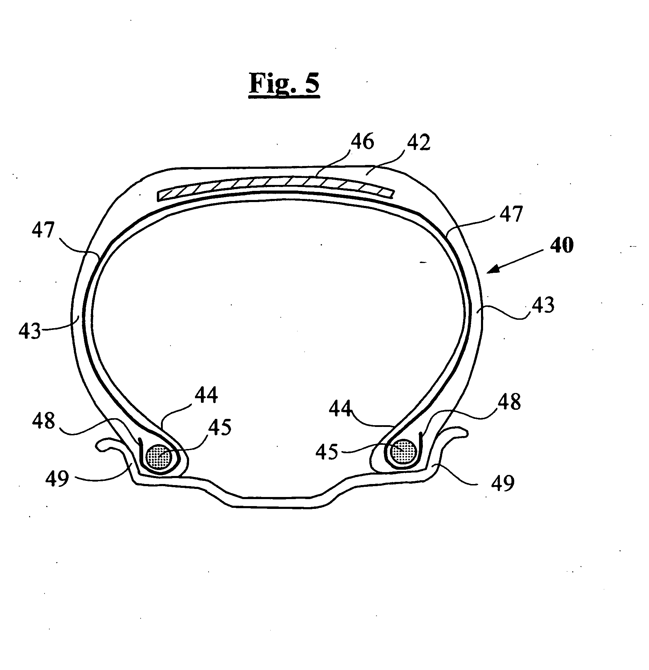

- une courbe force-allongement d'un câble élastique conforme à l'invention (Fig. 1) ;
- en coupe transversale, deux câbles élastiques de construction 1+N conformes à l'invention, utilisables par exemple dans une ceinture d'un pneumatique pour véhicule tourisme, camionnette ou Poids-lourd (Fig. 2 et Fig. 3) ;
- en coupe transversale, un câble à torons élastique conventionnel, de construction 3(1+5), utilisable également dans une ceinture d'un tel pneumatique (Fig. 4) ;
- en coupe radiale, et dans une représentation très générale, une enveloppe de pneumatique à armature de carcasse radiale, par exemple pour véhicule tourisme, camionnette ou Poids-lourd, pouvant incorporer dans sa ceinture un câble conforme à l'invention (Fig. 5).

## I. MESURES ET TESTS

### I-1. Mesures dynamométriques

Pour ce qui concerne les fils et câbles métalliques, les mesures de force à la rupture notée Fm (charge maximale en N), de résistance à la rupture notée Rm (en MPa), et d'allongement total à la rupture (noté At) (allongement relatif en %) sont effectuées en traction, selon la norme ISO 6892 (1984). On enregistre la courbe Force-Elongation (Force-Allongement) des câbles testés, sous une précontrainte initiale standard de 13 MPa, courbe à partir de laquelle peuvent être déduites les valeurs d'allongement structural (noté As) et d'allongement élastique (noté Ae) du câble (allongements relatifs en %), comme schématisé par exemple à la Fig. 1.

En ce qui concerne les fibres, les propriétés mécaniques en extension sont mesurées de manière connue à l'aide d'une machine de traction " INSTRON" (pinces "4D"). Chaque élément de fibre textile subit une traction (sous une prétension initiale standard de 0,5 cN/tex), sur une longueur initiale de 400 mm à une vitesse nominale de 200 mm/min, après un conditionnement préalable d'au moins 24 heures dans une atmosphère standard (selon norme européenne DIN EN 20139 ; température de 20 $\pm$ 2°C ; hygrométrie de 65 $\pm$ 2 %). L'allongement relatif à la rupture de la fibre (Af) est indiqué en pourcentage (%).

Quant aux compositions de caoutchouc, leurs mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement relatif, noté E10 et exprimé en MPa (conditions normales de température et d'hygrométrie selon la norme ASTM D 1349 de 1999).

### I-2. Test de perméabilité à l'air

Le test de perméabilité à l'air constitue un moyen simple de mesure indirecte du taux de pénétration du câble par une composition de caoutchouc. Il est réalisé sur des câbles extraits directement, par décorticage, des nappes de caoutchouc vulcanisées qu'ils renforcent, ces câbles étant donc pénétrés par le caoutchouc cuit.

Le test est réalisé sur une longueur de câble déterminée (par exemple 2 cm) de la manière suivante: on envoie de l'air à l'entrée du câble, sous une pression donnée (par exemple 1 bar), et on mesure le volume d'air à la sortie, à l'aide d'un débitmètre ; pendant la mesure l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le caoutchouc est plus élevé.

## II. DESCRIPTION DETAILLEE DE L'INVENTION

### II-1. Câble de l'invention

Le câble composite (métal-textile) à deux couches (Ci, Ce) de l'invention, de construction 1+N, est formé d'un noyau ou couche interne (Ci) comportant un fil d'âme textile de diamètre $d_1$, et une couche externe métallique (Ce) de N fils de diamètre $d_2$ enroulés ensemble en hélice selon un pas $p_2$ autour de la couche Ci ; il présente en outre les caractéristiques suivantes combinées ($p_2$ en mm) :

- As > 1,0 % ; At > 4,0 % ; Af > 6,0 % ; $d_1$ > 1,1 $d_2$ ; 4 < $p_2$ <14;
- le fil d'âme est une fibre textile, et il est enrobé d'une gaine de composition d'élastomère diénique,

As étant l'allongement structural du câble composite, At son allongement total à la rupture, et Af étant l'allongement à la rupture de la fibre textile.

En d'autres termes, le câble de l'invention est gommé intérieurement ("gommé in situ") : son fil d'âme et sa couche Ce sont séparés radialement par une épaisseur minimale (ou gaine) de composition d'élastomère diénique. Sauf revêtement (*"coating"*) ultérieur par un autre caoutchouc ou polymère, le câble de l'invention est donc, en tant que tel, dépourvu de gomme ou toute autre gaine de polymère à sa périphérie (i.e., autour des N fils individuels constituant sa couche externe Ce), tel qu'il est représenté par exemple aux Fig. 2 et 3 annexées qui seront commentées en détail ultérieurement.

Le câble de l'invention est un câble dit du type "élastique" (ou "haute élongation"), c'est-à-dire un câble vérifiant par définition, dans la présente demande, au moins les deux caractéristiques suivantes :

$$As > 1,0 \% \; ; At > 4,0 \%.$$

On rappelle que de manière bien connue de l'homme du métier (voir par exemple documents US 5 843 583 et WO 2005/014925 précités), l'allongement total à la rupture (At) d'un câble métallique élastique est la somme de trois allongements distincts (At = As + Ae + Ap) :

- un allongement structural As, résultant de la construction, aération même du câble et de son élasticité propre, le cas échéant d'une préformation imposée à un ou plusieurs de ces fils constitutifs ;
- un allongement élastique Ae, résultant de l'élasticité même du métal des fils métalliques, pris individuellement (loi de Hooke) ;
- un allongement plastique Ap, résultant de la plasticité (déformation irréversible au-delà de la limite d'élasticité) du métal de ces fils métalliques pris individuellement.

Ainsi, une courbe de traction (ou courbe Force-Elongation) d'un tel câble se caractérise par trois zones de modules (pentes) bien différentes, comme illustré à la Fig. 1. On voit bien sur cette courbe de traction (référencée 1) :

- une première zone (2) de pente(s) faible(s) pour les faibles allongements, correspondant à la partie structurale de l'allongement ;
- une deuxième zone (3) de pente sensiblement constante et forte pour les allongements supérieurs, correspondant à la partie élastique de l'allongement (loi de Hooke) ;
- enfin une troisième zone (4) dans laquelle le module (tangente à la courbe de traction) diminue avec l'augmentation d'allongement, correspondant à la partie plastique de l'allongement.

Par convention reconnue de l'homme du métier, l'allongement structural As est défini, sur la courbe Force-Elongation, comme le point d'intersection (5) entre l'abscisse (axe de l'élongation) et la tangente (6) à la partie élastique (3) de la courbe de traction (1). Les allongements As+Ae (7) et l'allongement total At (8) se déduisent aisément de la courbe comme indiqué à la Fig. 1.

De préférence, dans le câble de l'invention, on a les relations suivantes qui sont vérifiées :

- As > 1,5 % ; At > 4,5 %.

Plus préférentiellement encore, on a les relations :

- As > 2,0 % ; Art > 5,5 %.

Dans le câble de l'invention, le rapport $d_1/d_2$ doit être supérieur à 1,1, préférentiellement supérieur à 1,3. Si l'âme textile est trop petite par rapport au diamètre des fils métalliques, la désaturation de la couche externe Ce est insuffisante, son aération structurale comme ses valeurs d'allongements As et At sont trop faibles ; il existe en outre des risques d'instabilité et d'irrégularité de l'assemblage ; tout ceci ne permet pas d'atteindre le niveau d'endurance minimal visé. D'autre part, selon les applications concernées, une âme textile trop grosse peut nuire à la compacité et au coût du câble par unité de section, finalement à son encombrement dans le composite ou tissu qu'il est destiné à renforcer. Pour toutes les raisons indiquées ci-dessus, le rapport $d_1/d_2$ est de préférence compris entre 1,3 et 3,0, plus préférentiellement encore compris dans un domaine de 1,5 à 2,5.

La couche interne Ci du câble, appelée couramment "noyau" (*"core"*) par l'homme du métier, comporte donc une fibre textile enrobée d'une gomme de gainage.

Par fibre textile, on entend ici et de manière générale tout type de fil textile, synthétique ou naturel, qu'il soit à l'état de monofil c'est-à-dire d'un filament élémentaire (unitaire) de diamètre relativement élevé (par exemple égal ou supérieur à 50 $\mu$m), ou à l'état de fibre multifilamentaire (*"yarn"* en anglais) comportant une pluralité de filaments élémentaires de diamètre relativement faible (par exemple inférieur à 50 $\mu$m), lesdits monofils ou fibres multifilamentaires pouvant être torsadés (i.e., pourvus d'une torsion) ou non torsadés (i.e., dépourvus de torsion), ladite fibre multifilamentaire pouvant être elle-même élémentaire (*"single yarn"*) ou résultant de l'assemblage de plusieurs brins élémentaires, eux-mêmes torsadés ou non. La définition précédente s'applique à un fil à l'état brut comme à un fil traité, comportant par exemple un système adhésif pour caoutchouc.

La fibre textile choisie doit présenter, à l'état initial (avant fabrication du câble) comme à l'état final (après fabrication du câble, donc sous sa forme gainée), un allongement à la rupture Af supérieur à 6%, sans quoi l'allongement structural As du câble est insuffisant et ses propriétés d'endurance dégradées. Pour cette raison, on préfère que Af soit supérieur à 8%, plus préférentiellement supérieur à 10%. De telles caractéristiques excluent par exemple les fibres textiles à très haut module et à faible allongement à la rupture telles que les fibres aramide.

Pour les raisons indiquées ci-dessus, la fibre textile de l'âme est choisie de préférence dans le groupe constitué par les fibres en polyester thermoplastique (tel que par exemple PET ou PEN), en polyamide thermoplastique (tel que par exemple polyamide ou Nylon® 6-6), en cellulose (telle que rayonne), et les mélanges de telles fibres.

On préfère tout particulièrement utiliser une fibre en polyester thermoplastique, notamment en PET (polyéthylène téréphtalate) ou en PEN (polyéthylène naphtalate).

De préférence, le titre de la fibre textile est compris entre 100 et 300 tex (poids en grammes de 1000 mètres de fibre - rappel : 0,111 tex est égal à 1 denier), plus préférentiellement compris entre 150 et 250 tex. Ce titre est déterminé sur échantillon de 50 m, par pesée de cette longueur de fibre, après un conditionnement préalable pendant au moins 24 heures, dans une atmosphère standard (norme DIN EN 20139).

De préférence cette fibre textile est une fibre multifilamentaire. Ses filaments élémentaires ont un diamètre préférentiellement compris entre 5 et 50 $\mu$m, plus préférentiellement entre 10 et 30 $\mu$m.

Cette fibre multifilamentaire est encore plus préférentiellement pourvue de torsion :

- qu'elle soit constituée d'un seul brin encore appelé "filé" (*"single yarn"*) ; dans ce cas, ses filaments élémentaires sont tordus sur eux-mêmes par un procédé dit de surtordage pour former ce que l'on a coutume d'appeler un "surtors" (*"folded yarn"*), ou
- qu'elle soit constituée de plusieurs brins ; dans ce cas, ce sont les brins qui sont tordus entre eux par une opération dite de retordage pour former un "retors" textile (*"cord"* ou *"plied yarn"*).

La torsion permet avantageusement de moduler l'allongement structural As du câble et sa rigidité (partie initiale de sa courbe force-allongement), en fonction de l'application visée. Ainsi, de préférence, les filaments élémentaires de la fibre multifilamentaire présentent une torsion comprise entre 50 et 500 tours/mètre, plus préférentiellement comprise entre 150 et 450 tours/mètre.

Un autre avantage d'une fibre multifilamentaire est qu'elle s'est révélée, dans le câble de l'invention, conserver sa tension après fabrication du câble, contrairement au cas d'un monofil qui a tendance à se relaxer. Une prétension mécanique maintenue sur l'âme va retarder le travail mécanique de la couche externe métallique, ce qui peut constituer avantageusement une réserve d'allongement par exemple pour la nappe ou le tissu caoutchouté que le câble est destiné à renforcer dans le pneumatique de l'invention.

Selon un mode de réalisation préféré, la fibre textile est incorporée sous une forme encollée, c'est-à-dire qu'elle comporte déjà une couche adhésive, par exemple une colle du type RFL (résorcinol formol latex) ou composition adhésive équivalente, destinée à favoriser son adhésion à la composition d'élastomère diénique de la gomme de gainage.

Le diamètre $d_1$ de l'âme ou fibre textile est de préférence compris entre 0,2 et 1,5 mm, plus préférentiellement compris entre 0,3 et 1 mm.

La fibre textile précédemment décrite est donc enrobée d'une gaine de composition d'élastomère (ou caoutchouc, les deux étant synonymes) du type diénique, appelée aussi "gomme de gainage" dans la présente demande.

Les élastomères diéniques peuvent être classés de manière connue en deux catégories, ceux dits essentiellement insaturés et ceux dits essentiellement saturés. C'est ainsi, par exemple, que les caoutchoucs butyle ou les copolymères de diènes et d'alpha-oléfines type EPDM entrent dans la définition d'élastomères diéniques essentiellement saturés (taux de motifs d'origine diénique faible ou très faible, toujours nettement inférieur à 15%).

Bien qu'elle soit applicable à tout type d'élastomère diénique, la présente invention est préférentiellement mise en oeuvre avec un élastomère diénique du type fortement insaturé. Cet élastomère diénique est plus préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La gomme de gainage peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères.

La gomme de gainage est du type réticulable ou réticulée, c'est-à-dire qu'elle comprend par définition un système de réticulation adapté pour permettre la réticulation (durcissement) de la composition lors de sa cuisson ultérieure dans l'article fini (par exemple pneumatique). De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

La gomme de gainage peut comporter également, outre ledit système de réticulation, tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

Le taux de charge renforçante, par exemple du noir de carbone ou une charge inorganique renforçante telle que silice, est de préférence supérieur à 50 pce, par exemple compris entre 60 et 140 pce. Il est plus préférentiellement supérieur à 70 pce, par exemple compris entre 70 et 120 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice ($SiO_2$), notamment les silice précipitées ou pyrogénées présentant une surface BET inférieure à 450 $m^2$/g, de préférence de 30 à 400 $m^2$/g.

L'homme de l'art saura, à la lumière de la présente description, ajuster la formulation de la gomme de gainage afin d'atteindre les niveaux de propriétés (notamment module d'élasticité) souhaités, et adapter la formulation à l'application spécifique envisagée.

La formulation de la gomme de gainage peut être choisie identique ou non à la formulation de la matrice de caoutchouc que les câbles de l'invention sont destinés à renforcer, l'essentiel étant qu'il n'y ait pas de problème de compatibilité entre les matériaux respectifs. De préférence, la gomme de gainage présente, à l'état réticulé, un module sécant en extension E10 (à 10% d'allongement) compris entre 4 et 25 MPa, plus préférentiellement entre 4 et 20 MPa ; des valeurs comprises notamment entre 5 et 12 MPa se sont révélées convenir particulièrement pour le renforcement des ceintures de pneumatiques.

La gaine de caoutchouc entourant le fil d'âme a une épaisseur minimale qui est de préférence supérieure à 10$\mu$m, plus préférentiellement supérieure à 20 $\mu$m, et une épaisseur maximale de préférence inférieure à 200 $\mu$m, plus préférentiellement inférieure à 100 $\mu$m, ceci en tout point de la couche interne (Ci).

Son épaisseur moyenne est de préférence comprise entre 25 et 75 $\mu$m, plus préférentiellement comprise entre 40 et 60 $\mu$m, ceci quel que soit le diamètre de l'âme textile $d_1$. Ce domaine préférentiel de valeurs s'est révélé un très bon compromis en termes de faisabilité, compacité, coût, particulièrement de la caractéristique As essentielle pour la performance et l'endurance du câble en pneumatique.

En d'autres termes, compte tenu de la plage de variation du diamètre $d_1$ du fil d'âme, la couche interne Ci (constituée, rappelons-le, du fil d'âme et de la gomme de gainage qui entoure ledit fil) a un diamètre qui est de préférence compris entre 0,2 et 1,7 mm, plus préférentiellement compris entre 0,3 et 1,1 mm.

La couche externe métallique (Ce) est donc constitué de N fils individuels, de diamètre $d_2$, enroulés ensemble en hélice selon un pas $p_2$ autour de la couche Ci précédemment décrite, ledit pas $p_2$ étant compris entre 4 et 14 mm. On rappelle ici que, de manière bien connue, le pas « p » représente la longueur, mesurée parallèlement à l'axe du câble, au bout de laquelle un fil ayant ce pas effectue un tour complet autour dudit axe du câble. Un pas $p_2$ trop court (inférieur à 4 mm) est nuisible à l'allongement structural du câble de l'invention ; on se heurte par ailleurs à un problème de faisabilité avec des risques de défaut d'assemblage. Un pas $p_2$ trop important (supérieur à 14 mm) est préjudiciable à l'élasticité du câble. Pour toutes ces raisons, le pas $p_2$ est de préférence compris entre 5 et 12 mm, encore plus préférentiellement compris dans un domaine de 6 à 10 mm.

De préférence les N fils de la couche Ce sont tous métalliques, étant entendu toutefois que l'invention s'applique également aux cas où une fraction minoritaire d'entre eux serait remplacée par un ou plusieurs fil(s) d'une nature différente, autre que métallique.

Les N fils de la couche Ce ont un diamètre $d_2$ qui est de préférence compris entre 0,15 et 0,45 mm, plus préférentiellement compris entre 0,20 et 0,40 mm.

Selon un mode préférentiel de l'invention, le sens de torsion (Z ou S) de la couche Ce métallique (i.e., celui de ses N fils) est le même (respectivement Z ou S) que celui de l'âme textile (i.e., de ses filaments élémentaires) de la couche Ci lorsque ladite âme est une fibre multifilamentaire pourvue de torsion. On a constaté qu'une telle configuration était encore plus favorable à l'allongement structural As du câble.

Selon un autre mode préférentiel, afin d'obtenir d'une part un allongement structural As plus élevé et d'autre part une meilleure pénétrabilité du câble de l'invention par une matrice de polymère quelconque en favorisant ainsi sa résistance à la corrosion, on préfère que la couche externe Ce soit une couche dite "insaturée" ou "incomplète", c'est-à-dire que, par définition, il existe suffisamment de place dans cette couche tubulaire Ce pour y ajouter au moins un (N+1) ème fil de diamètre $d_2$, plusieurs des N fils se trouvant éventuellement au contact les uns des autres. Réciproquement, cette couche tubulaire Ce serait qualifiée de "saturée" ou "complète" s'il n'existait pas suffisamment de place dans cette couche pour y ajouter au moins un (N+1)ème fil de diamètre $d_2$.

De préférence, le taux d'insaturation de la couche externe Ce est tel que l'on ne peut y ajouter que un ou deux fils, plus préférentiellement encore qu'un seul fil supplémentaire de diamètre $d_2$.

Les fils métalliques de la couche.Ce sont préférentiellement en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est utilisé, sa teneur en carbone est de préférence comprise entre 0,4% et 1,2%, notamment entre 0,5% et 1,1%. Elle est plus préférentiellement comprise entre 0,6% et 1,0% (% en poids d'acier), une telle teneur représentant un bon compromis entre les propriétés mécaniques requises pour le composite et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Les fils métalliques du câble de l'invention possèdent une résistance en traction (Rm) de préférence supérieure à 2000 MPa, plus préférentiellement supérieure à 2500 MPa. L'homme du métier sait comment fabriquer des fils d'acier présentant de telles caractéristiques, en ajustant notamment la composition de l'acier et les taux d'écrouissage final de ces fils, en fonction de ses besoins propres particuliers.

Selon un mode préférentiel, la couche externe Ce comporte de 4 à 10 fils (N= 4-10), en d'autres termes le câble de l'invention est choisi dans le groupe des câbles de constructions 1+4, 1+5, 1+6, 1+7, 1+8, 1+9 et 1+10. Selon un mode plus préférentiel de réalisation de l'invention, le câble sélectionné a pour construction 1+5, 1+6 ou 1+7.

Le câble selon l'invention peut être fabriqué selon différentes techniques, par exemple :

- tout d'abord par gainage, via une tête d'extrusion, du fil d'âme avec la gomme de gainage à l'état cru, suivi
- d'une opération finale de câblage ou retordage, en ligne avec la précédente, des N fils de la couche Ce autour de la couche Ci, opération au cours de laquelle les N fils vont venir prendre appui, transitoirement, sur la gomme de gainage crue.

L'homme du métier aurait pu s'attendre à ce que la gomme de gainage à l'état cru et sous température relativement élevée, présentant par conséquent une viscosité réduite, migre entre les N fils de la couche externe avant que ces derniers n'aient eu le temps de se mettre correctement en place. De manière surprenante, il n'en est rien ; la viscoélasticité de la composition d'élastomère diénique semble a posteriori bien adaptée pour éviter ce problème.

De préférence, l'opération finale ci-dessus de mise en place de la couche externe Ce est opérée par un procédé de retordage, par exemple à l'aide d'une retordeuse à alimentation ou réception tournante, ledit procédé comportant essentiellement les étapes suivantes :

- enrouler en hélice sur ladite couche interne Ci les fils de ladite couche externe Ce selon un pas de torsion transitoire donné ; puis
- appliquer une surtorsion destinée à réduire ce pas transitoire, c'est-à-dire à augmenter l'angle d'hélice de ladite couche externe Ce et, par conséquent, la courbure d'hélice de cette dernière ; puis
- stabiliser par détorsion le câble obtenu pour l'obtention d'un couple résiduel nul.

Un tel procédé de retordage confère à chaque fil de la couche externe Ce une courbure excessive qui l'écarte, lors de la détorsion, de la couche interne Ci et de la gomme de gainage. Cette courbure est définie, d'une part par le diamètre d'hélice de cette couche externe et, d'autre part, par le pas d'hélice $p_2$ (ou bien angle d'hélice) de ladite couche externe Ce.

En résumé, selon un mode de réalisation particulièrement préféré de l'invention, on a au moins une (indépendamment des autres) caractéristiques listées ci-après qui est vérifiée dans le câble de l'invention :

- As > 1,5% ;
- At > 4,5 % ;
- Af > 8,0 % ;
- 1,3 < ($d_1$ / $d_2$) ;
- 5 < $p_2$ < 12 (mm);
- 0,2 < $d_1$ < 1,5 (mm) ;
- 0,15 < $d_2$ < 0,45 (mm);
- l'épaisseur moyenne de la gaine d'élastomère diénique est comprise entre 25 et 75 $\mu$m ;
- la fibre textile de l'âme est choisie dans le groupe constitué par les fibres en polyester thermoplastique, en polyamide thermoplastique, en cellulose, et les mélanges de telles fibres ;
- la fibre textile de l'âme est une fibre multifilamentaire ;
- la fibre textile de l'âme est pourvue de torsion ;
- la couche interne Ci a un diamètre compris entre 0,2 et 1,7 mm ;
- la couche externe Ce comporte de 4 à 10 fils.

Plus préférentiellement l'ensemble des caractéristiques préférentielles ci-dessus est vérifié.

Selon un mode de réalisation encore plus particulièrement préféré de l'invention, on a au moins une (indépendamment des autres) caractéristiques listées ci-après qui est vérifiée dans le câble de l'invention :

- As > 2,0 % ;
- At > 5,5 % ;
- Af > 10,0 % ;
- $1,3 < (d_1 / d_2) < 3,0$ ;
- $6 \leq p_2 \leq 10$ (mm) ;
- $0,3 < d_1 < 1,0$ (mm) ;
- $0,2 < d_2 < 0,4$ (mm) ;
- l'épaisseur moyenne de la gaine d'élastomère diénique est comprise entre 40 et 60 $\mu$m ;
- la fibre textile de l'âme est en polyester thermoplastique ;
- la fibre textile de l'âme est une fibre multifilamentaire dont la torsion est comprise entre 50 et 500 tours/mètre ;
- la direction de torsion de la fibre de l'âme est la même (S ou Z) que celle des N fils de la couche externe ;
- la couche interne Ci a un diamètre compris entre 0,3 et 1,1 mm ;
- la couche externe Ce comporte 5, 6 ou 7 fils.

Plus préférentiellement encore, l'ensemble des caractéristiques plus préférentielles ci-dessus est vérifié.

L'invention concerne bien entendu le câble précédemment décrit tant à l'état cru (sa gomme de gainage étant alors non vulcanisée) qu'à l'état cuit (sa gomme de gainage étant alors vulcanisée).

A titre d'exemples, les Fig. 2 et Fig. 3 schématisent respectivement, en coupe perpendiculaire à l'axe du câble (supposé rectiligne et au repos), deux câbles préférentiels de construction 1+6 (câble noté ci-après C-1) et construction 1+7 (câble noté ci-après C-2).

Dans ces représentations schématiques, chaque fil de la couche Ce a été représenté, en coupe transversale, comme ayant un contour circulaire, ceci pour simplification ; bien entendu, l'homme du métier sait que la forme réelle est celle d'une ellipse et non d'un cercle, ellipse d'autant plus marquée que la torsion des fils externes est élevée (ou que le pas de l'hélice de torsion est court).

Les câbles C-1 et C-2 selon l'invention comportent d'abord une couche interne (ou noyau) Ci constituée du fil d'âme (10, 20) recouvert d'une gomme de gainage (11, 21). Le fil d'âme est constitué par exemple par un monofil ou une fibre multifilamentaire, par exemple en polyester thermoplastique tel que PET ou PEN, polyamide thermoplastique tel que Nylon® 6-6 ou encore en rayonne, dont le diamètre est par exemple égal à 0,5 mm environ.

Dans les deux cas, la gaine de caoutchouc (11, 21) a une épaisseur moyenne de 50 $\mu$m, elle s'étend de manière continue autour dudit fil d'âme (10, 20) qu'elle recouvre, c'est-à-dire que cette gaine est continue dans la direction "orthoradiale" du câble (perpendiculaire à son rayon). La composition élastomérique (à base de caoutchouc naturel et de noir de carbone) constituant la gomme de gainage du câble de l'invention a par exemple la même formulation que celle de la nappe de caoutchouc de ceinture que le câble est destiné à renforcer.

La couche Ci, formée par l'âme textile gainée de caoutchouc est elle-même entourée d'une couche externe Ce de six ou sept fils métalliques (12, 22) dont le diamètre ($d_2$) est inférieur à celui ($d_1$) du fil d'âme textile (10, 20). Les fils métalliques sont enroulés ensemble en hélice selon un pas $p_2$ autour de la couche Ci. On voit bien que les fils (10, 12 d'une part ; 20, 22 d'autre part) sont ainsi disposés selon deux couches (Ci, Ce) tubulaires, concentriques et essentiellement adjacentes, donnant au câble son contour externe (13, 23) cylindrique.

La gaine de caoutchouc (11, 21) recouvre complètement le fil d'âme (10, 20), sur toute sa périphérie. La courbure donnée lors du retordage à chaque fil métallique (12, 22) de la couche Ce, est telle que ces fils ne sont plus, tout au moins sur le câble au repos (sans tension), au contact de la gomme de gainage et de la couche interne Ci.

<u>II-2. Utilisation en pneumatique</u>

Le câble de l'invention est avantageusement utilisable, en tant que tel ou par exemple incorporé à un tissu composite métal-caoutchouc, pour le renforcement de pneumatiques.

Un tel tissu composite métal-caoutchouc peut se présenter sous des formes variées, par exemple sous la forme d'une nappe, bande, bandelette ou série de bandelettes, autres blocs de caoutchouc, de formes et dimensions variées selon les applications visées, dans lesquels sont incorporés ou avec lesquels coopèrent des câbles de l'invention, étant par ailleurs entendu que les compositions élastomériques formant la matrice de caoutchouc du composite peuvent être de formulation identique ou différente à celle utilisée, dans le câble, pour le gainage de l'âme textile. Dans ce composite, l'adhésion définitive entre le métal et la composition de caoutchouc est obtenue de manière connue à l'issue de la cuisson de l'article fini (par exemple le pneumatique) comportant ledit composite. De préférence, cette cuisson est opérée sous pression.

Le câble de l'invention est particulièrement adapté au renforcement des ceintures de pneumatiques, par exemple de pneumatiques pour véhicules deux-roues tels que moto, avion, véhicules tourisme ou véhicules industriels tels que camionnettes, Poids-lourd ou Génie-civil.

La Fig. 5 représente de manière schématique une coupe radiale d'un pneumatique pouvant être conforme ou non à l'invention, dans cette représentation générale.

Ce pneumatique 40 comporte un sommet 42 renforcé par une armature de sommet ou ceinture 46, deux flancs 43 et deux bourrelets 44, chacun de ces bourrelets 44 étant renforcé par exemple avec une tringle 45. Le sommet 42 est surmonté d'une bande de roulement non représentée sur cette figure schématique. Une armature de carcasse 47 est enroulée autour des deux tringles 45 dans chaque bourrelet 44, le retournement 48 de cette armature 47 étant par exemple disposé vers l'extérieur du pneumatique 40 qui est ici représenté monté sur sa jante 49. L'armature de carcasse 47 est de manière connue en soi constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 44 et passe par le milieu de l'armature de sommet 46).

Bien entendu, ce pneumatique 40 comporte en outre de manière connue une couche de gomme ou élastomère intérieure (communément appelée "gomme intérieure") qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renfort qui est située entre la nappe de carcasse et la couche intérieure, destinée à renforcer la couche intérieure et, par conséquent, la nappe de carcasse, également destinée à délocaliser partiellement les efforts subis par l'armature de carcasse.

Cet exemple de pneu conforme à l'invention est caractérisé en ce que sa ceinture 46 comporte au moins une nappe ou couche de protection recouvrant radialement le reste de la ceinture, dont les câbles de renforcement sont des câbles conformes à l'invention.

Dans cette nappe de protection de ceinture, la densité des câbles conformes à l'invention est de préférence comprise entre 30 et 60 câbles par dm (décimètre) de nappe de ceinture. Les câbles conformes à l'invention sont de préférence disposés de telle manière que la largeur (notée L) du pont de caoutchouc, entre deux câbles adjacents, est comprise entre 0,5 et 1,5 mm. Cette largeur L représente de manière connue la différence entre le pas de calandrage (pas de pose du câble dans le tissu de caoutchouc) et le diamètre du câble. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques d'apparition de pénétration d'objets, par perforation, entre les câbles.

De préférence, la composition de caoutchouc utilisée pour le tissu de la nappe de ceinture présente, à l'état vulcanisé (i.e., après cuisson), un module sécant en extension $E10$ qui est compris entre 4 et 15 MPa, de préférence entre 5 et 12 MPa. C'est dans un tel domaine de module que l'on a enregistré le meilleur compromis d'endurance entre les câbles de l'invention d'une part, les tissus renforcés de ces câbles d'autre part.

## III. EXEMPLES DE REALISATION DE L'INVENTION

### III-1. Câbles de l'invention

On utilise dans les essais qui suivent des câbles à couches conformes à l'invention, de constructions 1+6 et 1+7, tels que décrits précédemment et schématisés aux Fig. 2 et 3.

Les fibres textiles utilisées (en PET) sont bien connues de l'homme du métier et disponibles commercialement, notamment sous une forme encollée. Le fil d'âme (10) du câble C-1 est constitué par un monofil en PET (*"regular"*) de diamètre 0,5 mm (ténacité = 58 cN/tex ; Af= 15%), encollé à l'aide d'une colle RFL connue. Le fil d'âme (20) du câble C-2 est une fibre multifilamentaire en PET (*"regular"*) de diamètre 0,45 mm et de titre 144 tex (ténacité = 62 cN/tex ; Af = 19%), pourvue d'une torsion sur elle-même de 180 tours/mètre, également encollée.

Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm. L'acier utilisé est un acier au carbone du type à haute résistance (dit HT pour *"High Tensile"*) dont la teneur en carbone est de 0,82% environ, comportant 0,5% de manganèse environ, le reste étant constitué de fer et des impuretés inévitables habituelles liées au procédé de fabrication de l'acier.

Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuses.

Les fils en acier ainsi tréfilés ont le diamètre $\phi$ et les propriétés mécaniques suivantes :

**Tableau 1**

| Fils | φ (mm) | Fm (daN) | At (%) | Rm (MPa) |
|------|--------|----------|--------|----------|
| 12 (Fig. 2) | 0,35 | 26.3 | 2.4 | 2765 |
| 22 (Fig. 3) | 0,23 | 12.4 | 2.6 | 3100 |

Le revêtement de laiton qui entoure les fils a une épaisseur très faible, nettement inférieure au micromètre, par exemple de l'ordre de 0,15 à 0,30 $\mu$m, ce qui est négligeable par rapport au diamètre des fils en acier.

Après gainage de l'âme textile par une composition d'élastomère diénique à l'état cru, les fils métalliques sont ensuite assemblés, en ligne avec l'opération de gainage, au pas $p_2$ pour former la couche externe Ce. Les deux câbles à couches conforme à l'invention ainsi obtenus, référencés C-1 et C-2, ont la construction, le diamètre externe $\phi_e$ (avantageusement inférieur à 1,5 mm dans les deux cas) et les propriétés mécaniques résumés dans le tableau 2 ci-dessous (résistance Rm ici calculée sur la seule section métallique du câble, contribution supprimée de la couche Ci) :

**Tableau 2**

| Câble | Construction | $\phi_e$ (mm) | Fm (daN) | Rm (MPa) | As (%) | Ae (%) | At (%) |
|-------|--------------|---------------|----------|----------|--------|--------|--------|
| C-1 | 1(0,50) + 6(0,35) | 1,30 | 122 | 2030 | 2,5 | 2,7 | 6,4 |
| C-2 | 1(0,45) + 7(0,23) | 0,95 | 80 | 2730 | 3,3 | 3,1 | 7,2 |

Le câble C-1 (1+6), tel que schématisé à la Fig. 2, est donc formé de 7 fils au total. Il comporte un noyau Ci formé du fil d'âme gainé, la composition d'élastomère diénique étant déposée via une tête d'extrusion, à la température de 90-100°C. Cette couche Ci est entourée d'une couche externe cylindrique de 6 fils métalliques eux-mêmes enroulés ensemble en hélice (direction S) autour de l'âme, selon un pas $p_2$ égal à 7,0 mm (soit un angle d'hélice d'environ 23°).

Le câble C-2, tel que schématisé à la Fig. 3, est formé de 8 fils au total. Il comporte une couche interne Ci entourée d'une couche externe cylindrique de 7 fils métalliques enroulés ensemble en hélice (direction S) autour de l'âme, selon un pas $p_2$ égal à 5,1 mm (soit un angle d'hélice d'environ 24°).

Dans les deux cas, la gaine de caoutchouc a une épaisseur moyenne de l'ordre de 50 $\mu$m. Au repos c'est-à-dire en l'absence de tension sur le câble de l'invention (tel que schématisé notamment aux Fig. 2 et 3), les N fils de la couche externe Ce ne sont pas au contact direct de la gomme de gainage, ce qui favorise bien entendu leur allongement structural. On voit bien par ailleurs que la structure de ce câble de l'invention lui donne un caractère très aéré le rendant pénétrable de l'extérieur, par exemple par de la gomme ou toute autre matrice polymérique.

La composition d'élastomère diénique (à base de caoutchouc naturel et de noir de carbone) constituant la gomme de gainage du câble de l'invention a la même formulation que celle de la nappe sommet de protection que le câble C-1 est destiné à renforcer dans l'essai qui suit.

On note en particulier que les deux câbles de l'invention présentent les caractéristiques préférentielles suivantes :

As > 2,0 % ; At > 6,0 %,

le câble élastique C-2 à haute compacité (présentant avantageusement un diamètre externe inférieur à 1,0 mm) vérifiant même les caractéristiques encore plus préférentielles ci-après :

As > 2,5 % ; At > 6,5 %.

Il est à noter ici que deux câbles témoins de structures 1+6 et 1+7 ont été préparés, présentant rigoureusement la même construction, respectivement, que celles des câbles C-1 et C-2 ci-dessus, exception faite de la présence d'une gomme de gainage. Il s'est avéré que, sans gomme de gainage, l'allongement structural As de ces câbles témoins était nettement dégradé, à savoir environ deux fois plus faible, par rapport aux câbles de l'invention C-1 et C-2.

III-2. Endurance en pneumatique

Le câble C-1 de l'invention a été incorporé par calandrage à un tissu composite formé d'une composition connue à base de caoutchouc naturel et de noir de carbone à titre de charge renforçante, utilisée conventionnellement pour la fabrication des nappes de protection de ceinture de pneumatiques Poids-lourd. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO) ; son module E10 est de l'ordre de 6 MPa.

Il a été comparé à un câble à torons témoin conventionnel, de construction 3(1+5) 0,23, formé de 18 fils métalliques ayant un diamètre de 0,23 mm. Ce câble noté ci-après C-3 a été schématisé à la Fig. 4. Il est constitué de 3 torons (30) retordus ensemble (direction S) selon un pas de 6 mm, chaque toron élémentaire consistant en un câble à couches de construction (1+5) formé de 6 fils identiques (32) et dont la couche externe de 5 fils a été assemblée (direction S) selon un pas de 4,0 mm. L'angle d'hélice de torsion, selon le fil considéré et sa position dans le câble, peut dépasser 40°.

Les propriétés du câble témoin C-3 sont indiquées dans le tableau 3 ci-dessous :

**Tableau 3**

| Câble | Construction | $\phi_e$ (mm) | Fm (daN) | Rm (MPa) | As (%) | Ae (%) | At (%) |
|-------|--------------|---------------|----------|----------|--------|--------|--------|
| C-3 | 3(1+5) (0,23) | 1,5 | 154 | 2140 | 1,7 | 2,3 | 6,5 |

Pour comparaison, les Fig. 2, 3 et 4 annexées ont été représentées sensiblement à la même échelle pour illustrer la différence d'encombrement notable existant entre les deux câbles de l'invention C-1 et C-2 d'une part, et un câble conventionnel à torons tel que le câble C-3 de la Fig. 4, d'autre part.

Les tissus composites renforcés par ces câbles C-1 et C-3 comportent une matrice de caoutchouc formée de deux couches fines de gomme qui sont superposées de part et d'autre des câbles et qui présentent respectivement une épaisseur de 0,7 mm (câble C-1) ou de 0,8 mm (câble C-3). Le pas de calandrage (pas de pose des câbles dans le tissu de caoutchouc) est de 2,25 mm (câble C-1) ou de 2,50 mm (câble C-3).

On réalise ensuite deux séries d'essais de roulage de pneumatiques Poids-lourd (notées P-1 et P-3) de dimensions 315/80 R22.5, avec dans chaque série des pneumatiques destinés au roulage, d'autres à un décorticage sur pneu neuf. Les pneus P-1 renforcés par les câbles C-1 de l'invention sont les pneumatiques conformes à l'invention. Les pneumatiques P-3 renforcés par les câbles C-3 constituent les pneus témoins de l'art antérieur ; ils constituent, en raison de leurs performances reconnues, un témoin de choix pour cet essai.

Les pneumatiques P-1 et P-3 sont donc identiques à l'exception des câbles qui renforcent la nappe de protection (unique) de leur ceinture. Cette ceinture (référencée 46 à la Fig. 5) est par exemple, de manière connue en soi, constituée de deux demi-nappes de triangulation renforcées de câbles métalliques conventionnels inclinés de 65 degrés, surmontées de deux "nappes de travail" superposées croisées. Ces nappes de travail sont renforcées par des câbles métalliques également conventionnels, inextensibles, disposés sensiblement parallèlement les uns par rapport aux autres et inclinés de 26 degrés (nappe radialement interne) et 18 degrés (nappe radialement externe). Les deux nappés de travail sont recouvertes par une nappe de protection unique renforcée par les câbles métalliques élastiques testés (respectivement C-1 et C-3), ces câbles étant inclinés de 18 degrés. Tous les angles d'inclinaison indiqués sont mesurés par rapport au plan circonférentiel médian.

On fait subir à ces pneumatiques un essai de roulage sévère, en surcharge, destiné à tester leur résistance aux chocs et à la perforation, ainsi qu'à la corrosion. Cet essai consiste à faire rouler les pneumatiques à vitesse modérée sur un sol agressif du type "chantier", recouvert de cailloux coupants, en leur imposant en outre une partie du roulage dans des zones du circuit inondées d'eau salée.

Au bout d'un temps déterminé, on arrête le test puis on décortique les pneumatiques testés. On dénombre ensuite, pour chaque pneumatique, le nombre de perforations dans la bande de roulement et on évalue qualitativement (par observation visuelle puis attribution d'une note) le degré de corrosion subi par les câbles testés.

On constate alors que les pneumatiques P-1 renforcés par les câbles de l'invention, dans les conditions très sévères de roulage qui leur sont imposées, présentent une endurance nettement améliorée par rapport aux pneumatiques témoins P-3 : le nombre de perforations est réduit de 16% dans la bande de roulement, la corrosion est réduite de 20%.

Les câbles C-1 et C-3 non fatigués, après extraction hors des pneumatiques neufs, ont été par ailleurs soumis au test de perméabilité à l'air décrit au paragraphe I-2, en mesurant le volume d'air (en $cm^3$) traversant les câbles en 1 minute (moyenne de 10 mesures).

Le tableau 4 ci-dessous présente les résultats obtenus (en unités relatives, base 100 sur le câble témoin) en terme de débit moyen d'air (moyenne sur 10 mesures) et de nombre de mesures correspondant à un débit d'air nul.

**Tableau 4**

| Câble | Débit moyen d'air (unités relatives) | Nombre de mesures à débit nul (en %) : |
|-------|--------------------------------------|----------------------------------------|
| C-1 | 0 | 100% |

(suite)

| Câble | Débit moyen d'air (unités relatives) | Nombre de mesures à débit nul (en %) : |
|-------|--------------------------------------|----------------------------------------|
| C-3   | 100                                  | 30%                                    |

Le câble C-1 de l'invention est celui qui, de loin, présente la perméabilité à l'air la plus faible (débit moyen d'air nul ou pratiquement nul) et par conséquent le taux de pénétration par le caoutchouc le plus élevé, compte tenu de sa construction spécifique et de son gommage in situ.

En conclusion, le câble de l'invention permet d'améliorer de manière notable l'endurance des ceintures de pneumatiques, particulièrement vis-à-vis des chocs, risques de perforation et de la corrosion.

Ses propriétés, particulièrement son allongement structural élevé combiné à un encombrement réduit, lui offrent une large panoplie d'applications possibles, notamment comme câble de renforcement dans des pneumatiques.

Dans la ceinture des pneumatiques, il pourra être également utilisé comme câble dit "circonférentiel", orienté sensiblement selon la direction circonférentielle du pneumatique (i.e., faisant un angle ne s'écartant pas de plus de cinq degrés avec la direction de rotation du pneumatique), pour le frettage du sommet du pneumatique, que ce câble de l'invention soit utilisé dans ce cas tel quel par simple enroulement "filamentaire", ou préalablement disposé dans différentes bandelettes, couches, ou nappes de caoutchouc, ces dernières pouvant être externes ou internes radialement par rapport aux nappes ou couches croisées desdits pneumatiques.

Le câble de l'invention est également utilisable pour renforcer des parties des pneumatiques autres que leur ceinture, notamment les armatures de carcasse, des zones basse de pneumatiques, en définitive toute partie du pneumatique utilisant habituellement, pour son renforcement, des câbles à forte élasticité du type HE.

Enfin, l'invention concerne également tout câble d'acier multi-torons *("multi-strand rope")* dont la structure incorpore au moins, en tant que toron élémentaire, au moins un câble à deux couches conforme à l'invention.

## Revendications

1. Câble composite élastique (C-1, C-2) à deux couches (Ci, Ce) de construction 1+N, gommé in situ, formé d'une couche interne (Ci) comportant un fil d'âme textile (10, 20) de diamètre $d_1$, et une couche externe métallique (Ce) de N fils (12, 22) de diamètre $d_2$ enroulés ensemble en hélice selon un pas $p_2$ autour de la couche interne (Ci), ledit câble composite étant **caractérisé en ce qu'**il présente les caractéristiques suivantes, $p_2$ étant exprimé en mm :

   ■ As > 1,0 % ; At > 4,0 % ; Af > 6,0 % ; $d_1$ > 1,1 $d_2$ ; 4 < $p_2$ <14 ;
   ■ le fil d'âme (10, 20) est une fibre textile, et il est enrobé d'une gaine de composition d'élastomère diénique (11, 21),

   As étant l'allongement structural du câble composite, At son allongement total à la rupture, et Af étant l'allongement à la rupture de la fibre textile.

2. Câble selon la revendication 1, As étant supérieur à 1,5% et At étant supérieur à 4,5%.

3. Câble selon la revendication 1 ou 2, Af étant supérieur à 8%.

4. Câble selon l'une quelconque des revendications 1 à 3, le rapport $d_1/d_2$ étant compris entre 1,3 et 3,0.

5. Câble selon l'une quelconque des revendications 1 à 4, la relation suivante étant vérifiée : 5 < $p_2$ < 12.

6. Câble selon l'une quelconque des revendications 1 à 5, $d_2$ étant compris entre 0,15 et 0,45 mm.

7. Câble selon l'une quelconque des revendications 1 à 6, $d_1$ étant compris entre 0,2 et 1,5 mm.

8. Câble selon l'une quelconque des revendications 1 à 7, la fibre textile étant une fibre multifilamentaire, de préférence en PET ou en PEN.

9. Câble selon la revendication 8, les filaments élémentaires de la fibre étant pourvus d'une torsion et le sens de torsion des filaments élémentaires étant le même que celui des fils de la couche externe (Ce).

**10.** Câble selon l'une quelconque des revendications 1 à 9, la gaine d'élastomère diénique présentant une épaisseur minimale supérieure à 10$\mu$m et une épaisseur maximale inférieure à 200 $\mu$m.

**11.** Câble selon l'une quelconque des revendications 1 à 10, l'élastomère diénique étant choisi dans le groupe constitué par les polybutadiènes, le caoutchouc naturel, les polyisoprènes de synthèse, les copolymères de butadiène, les copolymères d'isoprène, et les mélanges de ces élastomères.

**12.** Câble selon l'une quelconque des revendications 1 à 11, la couche externe (Ce) comportant 5 à 7 fils.

**13.** Pneumatique renforcé d'un câble selon l'une quelconque des revendications 1 à 12.

**14.** Procédé de fabrication d'un câble selon l'une quelconque des revendications 1 à 12, **caractérisé en ce qu'**il comporte les étapes suivantes :

- une première opération de gainage, via une tête d'extrusion, du fil d'âme textile (10, 20) avec la gomme de gainage (11, 21) à l'état cru, pour constitution de la couche interne (Ci), suivie ;
- d'une seconde opération de câblage ou de retordage, en ligne avec la première opération, des N fils (12, 22) de la couche externe (Ce) autour de la couche interne (Ci) ;

l'opération de retordage comportant essentiellement les étapes suivantes :

- enrouler en hélice sur ladite couche interne (Ci) les fils de ladite couche externe (Ce) selon un pas de torsion transitoire donné ; puis
- appliquer une surtorsion destinée à réduire ce pas transitoire, c'est-à-dire à augmenter l'angle d'hélice de ladite couche externe (Ce) et, par conséquent, la courbure d'hélice de cette dernière ; puis
- stabiliser par détorsion le câble obtenu pour l'obtention d'un couple résiduel nul.

**Patentansprüche**

**1.** Elastisches Verbundkabel (C-1, C-2) mit zwei Schichten (Ci, Ce) der Bauart 1+N, das am Einbauort gummiert wird und aus einer inneren Schicht (Ci), welche eine Textilseele (10, 20) mit dem Durchmesser $d_1$ aufweist, gebildet ist sowie aus einer äußeren metallischen Schicht (Ce) von N Drähten (12, 22) mit dem Durchmesser $d_2$, welche gemeinsam spiralförmig gemäß einem Wiederholabstand $p_2$ um die innere Schicht (Ci) gewickelt sind, wobei das Verbundkabel **dadurch gekennzeichnet ist, dass** es die folgenden Eigenschaftsmerkmale aufweist, wobei $p_2$ in mm ausgedrückt ist:

• As > 1,0 %; At > 4,0 %; Af > 6,0 %; $d_1$ > 1,1 $d_2$; 4 < $p_2$ < 14;
• die Seele (10, 20) ist eine Textilfaser, und sie ist von einer Schutzhülle aus einer Dien-Elastomer-Zusammensetzung (11, 21) überzogen,

wobei As die Strukturdehnung des Verbundkabels ist, At der Gesamtwert seiner Reißdehnung ist und Af die Reißdehnung der Textilfaser ist.

**2.** Kabel nach Anspruch 1, wobei As größer als 1,5 % ist und At größer als 4,5 % ist.

**3.** Kabel nach Anspruch 1 oder 2, wobei Af größer als 8 % ist.

**4.** Kabel nach einem beliebigen der Ansprüche 1 bis 3, wobei das Verhältnis $d_1/d_2$ im Bereich von 1,3 bis 3,0 liegt.

**5.** Kabel nach einem beliebigen der Ansprüche 1 bis 4, wobei die folgende Beziehung gilt: 5 < $p_2$ < 12.

**6.** Kabel nach einem beliebigen der Ansprüche 1 bis 5, wobei $d_2$ im Bereich von 0,15 bis 0,45 mm liegt.

**7.** Kabel nach einem beliebigen der Ansprüche 1 bis 6, wobei $d_1$ im Bereich von 0,2 bis 1,5 mm liegt.

**8.** Kabel nach einem beliebigen der Ansprüche 1 bis 7, wobei die Textilfaser eine Multifilamentfaser ist, vorzugsweise aus PET oder aus PEN.

9. Kabel nach Anspruch 8, wobei die Einzelfilamente der Faser gedreht sind und die Drehrichtung der Einzelfilamente dieselbe wie diejenige der Drähte der äußeren Schicht (Ce) ist.

10. Kabel nach einem beliebigen der Ansprüche 1 bis 9, wobei die Dien-Elastomer-Schutzhülle eine Mindestdicke von mehr als 10 $\mu$m und eine Höchstdicke von weniger als 200 $\mu$m aufweist.

11. Kabel nach einem beliebigen der Ansprüche 1 bis 10, wobei das Dien-Elastomer aus der Gruppe ausgewählt ist, die aus den Polybutadienen, natürlichem Kautschuk, den Polyisoprenen synthetischen Ursprungs, den Butadien-Copolymeren, den Isopren-Copolymeren und den Mischungen dieser Elastomere besteht.

12. Kabel nach einem beliebigen der Ansprüche 1 bis 11, wobei die äußere Schicht (Ce) 5 bis 7 Drähte aufweist.

13. Luftreifen, der mit einem Kabel nach einem beliebigen der Ansprüche 1 bis 12 verstärkt ist.

14. Verfahren zur Herstellung eines Kabels nach einem beliebigen der Ansprüche 1 bis 12, **dadurch gekennzeichnet, dass** es die folgenden Schritte aufweist:

    - einen ersten Vorgang der Umhüllung der Textilseele (10, 20) mit dem Umhüllungsgummi (11, 21) im Rohzustand, mittels eines Extrusionskopfes, um die innere Schicht (Ci) zu bilden, woraufhin;
    - ein zweiter Vorgang folgt, der sich unmittelbar an den ersten Vorgang anschließt und darin besteht, aus den N Drähten (12, 22) durch Kabelwicklung oder Verzwirnung die äußere Schicht (Ce) um die innere Schicht (Ci) herum zu bilden;

    wobei der Verzwirnungsvorgang im Wesentlichen die folgenden Schritte umfasst:

    - spiralförmiges Umwickeln der inneren Schicht (Ci) mit den Drähten der äußeren Schicht (Ce) gemäß einem gegebenen vorübergehenden Drehungswiederholabstand; und dann
    - Überlagern mit einer weiteren Drehung, die dazu bestimmt ist, diesen vorübergehenden Wiederholabstand zu verringern, das heißt, den Spiralwinkel der äußeren Schicht (Ce) und infolgedessen auch deren Spiralkrümmung zu erhöhen; und dann
    - Stabilisieren des Kabels durch eine Entdrehung, sodass keinerlei Restdrehmoment verbleibt.

**Claims**

1. Elastic composite cord (C-1, C-2) having two layers (Ci, Ce) of 1+N construction, rubberized *in situ,* formed from an inner layer (Ci) comprising a textile core thread (10, 20) of diameter $d_1$ and a metal outer layer (Ce) of N wires (12, 22) of diameter $d_2$ wound together in a helix with a pitch $p_2$ around the inner layer Ci, said composite cord being **characterized in that** it has the following characteristics, $p_2$ being expressed in mm:

    ■ As > 1,0%; At > 4,0%; Af > 6,0%; $d_1 > 1,1 d_2$; $4 < p_2 < 14$; and
    ■ the core thread (10, 20) is a textile fibre and is embedded in a sheath (11, 21) of diene elastomer composition,

    As being the structural elongation of the composite cord, At its total elongation at break, and Af being the elongation at break of the textile fibre.

2. Cord according to Claim 1, As being greater than 1,5% and At being greater than 4,5%.

3. Cord according to Claim 1 or 2, Af being greater than 8%.

4. Cord according to any one of Claims 1 to 3, the ratio $d_1/d_2$ being between 1,3 and 3,0.

5. Cord according to any one of Claims 1 to 4, the following relationship being satisfied:

$$5 < p_2 < 12.$$

**EP 1 984 560 B1**

6. Cord according to any one of Claims 1 to 5, $d_2$ being between 0,15 and 0,45 mm.

7. Cord according to any one of Claims 1 to 6, $d_1$ being between 0,20 and 1,5 mm.

8. Cord according to any one of Claims 1 to 7, the textile fibre being a multifilament fibre, preferably made in PET or PEN.

9. Cord according to Claim 8, the individual filaments being twisted and the direction of twist of the individual filaments being the same as that of the wires of the outer layer (Ce).

10. Cord according to any one of Claims 1 to 9, the diene elastomer sheath having a minimum thickness of greater than 10 $\mu$m and a maximum thickness of less than 200 $\mu$m.

11. Cord according to any one of Claims 1 to 10, the diene elastomer being chosen from the group consisting of polybutadienes, natural rubber, synthetic polyisoprenes, butadiene copolymers, isoprene copolymers and blends of these elastomers.

12. Cord according to any one of Claims 1 to 11, the outer layer (Ce) comprising 5 to 7 wires.

13. Tyre reinforced by a cord according to any one of Claims 1 to 12.

14. Process for manufacturing a cord according to any one of Claims 1 to 12, **characterized in that** it comprises the following steps:

- a first operation of sheathing, via an extrusion head, a textile core thread (10, 20) with the sheathing rubber (11, 21) in the uncured state, in order to constitute the inner layer (Ci), followed by:
- a second operation of cabling or twisting, in line with the first operation, N wires (12, 22) of the outer layer (Ce) around the inner layer (Ci).

the twisting step essentially comprising the following steps:

- the wires of said outer layer (Ce) are wound in a helix with a given transient twist pitch on said inner layer (Ci); then
- an overtwist is applied so as to reduce this transient pitch, that is to say to increase the helix angle of said outer layer (Ce) and, consequently, the helix curvature of the latter; and then
- the cord obtained is stabilized by untwisting it so as to obtain a zero residual torque.

## Fig. 1

## Fig. 2

## Fig. 3

## Fig. 4

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3686855 A
- US 4176705 A
- WO 2004003287 A
- US 20050183808 A
- US 5843583 A
- US 6475636 B
- WO 2004033789 A
- US 7089726 B
- WO 2005014925 A
- US 20060179813 A
- GB 1100686 A
- FR 2260660
- US 3977174 A
- US 20030051788 A